# EUROPÄISCHE PATENTSCHRIFT

(11) **EP 2 880 333 B1**
(45) Veröffentlichungstag und Bekanntmachung des Hinweises auf die Patenterteilung: **06.05.2020**
(21) Anmeldenummer: 13756802.8
(22) Anmeldetag: 25.07.2013
(51) Int. Cl.: F16F 1/18

(54) **PROFILSTAB UND DARAUS HERGESTELLTE FAHRZEUGFEDER**
PROFILED BAR, AND VEHICLE SPRING PRODUCED THEREFROM
BARRE PROFILÉE ET RESSORT DE SUSPENSION FABRIQUÉ À PARTIR DE LADITE BARRE PROFILÉE

(30) Priorität: 30.07.2012 AT 8452012
(43) Veröffentlichungstag der Anmeldung: 10.06.2015
(73) Patentinhaber: Hendrickson Commercial Vehicle Systems Europe GmbH, 8750 Judenburg (AT)
(72) Erfinder: KÜHNELT, Gerhard, A-8750 Oberweg (AT); ZAMBERGER, Jörg, A-8753 Fohnsdorf (AT)
(74) Vertreter: Beer & Partner Patentanwälte KG
(86) Internationale Anmeldenummer: PCT/AT2013/000124
(87) Internationale Veröffentlichungsnummer: WO 2014/019002

(56) Entgegenhaltungen:
- DE-C- 468 105
- GB-A- 467 407
- GB-A- 2 030 266
- US-A- 129 297
- US-A- 1 730 700
- US-A- 2 533 511

## Beschreibung

Die Erfindung betrifft eine Fahrzeugfeder, insbesondere Lenkerfeder oder Parabelfeder, mit einem länglichen Federkörper, der aus einem Profilstab aus Federstahl gewalzt ist, wobei der Federkörper eine Oberseite, eine Unterseite, zwei Schmalseiten, eine Längsachse, eine quer zur Längsachse verlaufende Querachse, die der neutralen Faser entspricht, eine im rechten Winkel zur Querachse von der Unterseite zur Oberseite verlaufende Achse sowie wenigstens eine Materialaussparung aufweist, die wenigstens bereichsweise über seine Länge vorgesehen ist, und wobei sich die Querschnittsform des Federkörpers über seine Länge ändert.

Darüber hinaus betrifft die Erfindung ein Federsystem für ein Fahrzeug.

Unter Fahrzeugfeder kann im Einsatzgebiet der Erfindung eine Luftfeder (Lenkerfeder), eine Parabelfeder, eine Blattfeder, insbesondere Einblatt- und Mehrblattparabelfeder, welche aus Flachstabstahl hergestellt sind, verstanden werden.

Fahrzeugfedern im Rahmen der Erfindung werden aus Flachstabstahl, vorzugsweise Federstahl, bei Temperaturen von ca. 800 bis 1200 °C warm verformt, insbesondere gewalzt. Bei warm verformten Fahrzeugfedern aus Flachstabstahl erhalten die Fahrzeugfedern ihre federnde Funktion durch das Material, d.h. die Fahrzeugfeder hat eine inhärente federnde Wirkung auf Grund des Ausgangsmaterials. Nach EN 10089,3.1 ist Federstahl folgendermaßen beschrieben: "Werkstoffe, die wegen ihrer Eigenschaften im vergüteten Zustand für die Herstellung von federnden Teilen aller Art besonders geeignet sind. Das Federungsvermögen der Stähle beruht auf ihrer elastischen Verformbarkeit, aufgrund derer sie innerhalb eines bestimmten Bereiches belastet werden können, ohne dass nach der Entlastung eine bleibende Formänderung auftritt...."

Es sind Federsysteme bekannt, bei denen Träger gegossen (z.B. wie in der DE 10 2008 061 190 offenbart) oder geschweißt (z.B. wie in der WO 2003/064192 offenbart) sind; diese Träger sind keine Federn im herkömmlichen Sinn. Solche Träger können - im Gegensatz zu warm verformbaren Stahl - nicht warm verformt sondern nur bei wesentlich höheren Temperaturen verarbeitet werden. Im Unterschied dazu ist z.B. Flachstabstahl aus Federstahl nahezu unschweißbar. Zudem erhalten die gegossenen oder geschweißten Träger durch ihre Materialeigenschaften im Einsatzzustand in einem Federsystem keine primär federnde Wirkung. Auf Grund der Materialeigenschaften bilden diese Träger an sich ein starres System. Die federnde Wirkung dieses Systems wird erst durch die besondere Anbindung des Trägers, meist durch ein im Träger eingearbeitetes Auge bzw. ein Trägerlager aus Gummi, erzielt.

Beim Schmieden mit Schmiedestahl (z.B. wie in der WO2009/014423 offenbart) wird keine Feder durch Walzen eines Profilstabes aus Flachstabstahl hergestellt.

Fahrzeugfedern finden Anwendung in Kraftfahrzeugen, insbesondere in Nutzfahrzeugen oder Anhängern (gezogenes Fahrzeug). Die Anforderungen der Kraftfahrzeugindustrie sind zum einen durch die Reduzierung des Gewichtes einzelner Bauteile geprägt. Zum anderen sind die Anforderungen auf Grund steigenden Motorleistungen dadurch geprägt, dass einzelne Bauteile immer höheren mechanischen Beanspruchungen unterliegen. Problematisch bei warm geformten Fahrzeugfedern aus Flachstabstahl ist dabei, dass das Gewicht der Fahrzeugfeder nicht ohne Weiteres reduziert werden kann, da die Fahrzeugfeder, insbesondere der Federkörper, auf Grund seiner federnden Funktion anderen Belastungen Stand halten muss, als gegossene oder geschweißte Produkte. Bislang wurde Gewicht einer Fahrzeugfeder dadurch eingespart, dass - ausgehend vom gleichen Ausgangsmaterial zum Herstellen der Fahrzeugfeder - die Geometrie der fertigen Fahrzeugfeder zum Erhöhen der Oberflächenspannung derart verändert wurde, dass die Fahrzeugfeder kompakter gebaut werden konnte.

Gattungsgemäße Fahrzeugfedern sind aus der US 129 297 A, der DE 468 105 C und der US 2 533 511 A bekannt.

Der Erfindung liegt die Aufgabe zu Grunde, eine Fahrzeugfeder der eingangs genannten Gattung zur Verfügung zu stellen, deren Gewicht im Vergleich zu einer herkömmlichen Fahrzeugfeder reduziert ist, wobei die inhärente federnde Funktion des Federkörpers gewährleistet bleibt und die mechanische Belastbarkeit nicht beeinträchtigt wird. Zudem ist es eine Aufgabe der Erfindung, eine Fahrzeugfeder mit verschiedenen Biegefestigkeitsbereichen auszubilden. In bestimmten Anwendungsfällen kann auch eine kompaktere Bauweise erzielt werden.

Gelöst wird diese Aufgabe mit einer Fahrzeugfeder, welche die Merkmale des Anspruches 1 aufweist.

Darüber hinaus wird diese Aufgabe mit einem Federsystem für ein Fahrzeug, welches die Merkmale des Anspruches 9 aufweist, gelöst.

Erfindungsgemäß ist vorgesehen, dass wenigstens eine Materialaussparung in wenigstens einer Schmalseite im Bereich der Querachse vorgesehen ist, dass sich die Breite der Materialaussparung über die Länge der Materialaussparung bzw. des Federkörpers ändert und dass die Tiefe der Materialaussparung im Bereich der Querachse größer ist als die Tiefe in den zur Unterseite und zur Oberseite weisenden Randbereichen der Materialaussparung.

Der Profilstab weist wenigstens eine Materialaussparung auf, die wenigstens bereichsweise über seine Länge vorgesehen ist. Somit kann das Gewicht der aus dem Profilstab hergestellten Fahrzeugfeder durch die Geometrie des verwendeten Ausgangsproduktes bis ca. 30 % oder mehr reduziert werden, wobei die Kraftaufnahme und die federnde Wirkung des Federkörpers nicht beeinträchtigt wird. Auch können somit kompaktere Fahrzeugfedern bei gleichbleibendem Gewicht hergestellt werden.

Im Rahmen der Erfindung ist der Profilstab vorzugsweise aus einem Federstahl nach DIN EN 10089 hergestellt.

In einer besonders bevorzugten Ausführungsform erstreckt sich die Materialaussparung über die gesamte Länge des Profilstabes.

Weiterhin ist bevorzugt, dass die Querschnittsform des Profilstabes über seine Länge gleich ist, d.h. dass sich die Querschnittsform des Profilstabes über seine Länge nicht ändert.

Im Rahmen der Erfindung weist der Profilstab eine Oberseite, eine Unterseite und zwei Schmalseiten auf, wobei wenigstens eine Materialaussparung vorzugsweise in wenigstens einer Schmalseite vorgesehen ist. Alternativ oder zusätzlich dazu kann wenigstens eine Materialaussparung in der Unterseite vorgesehen sein.

Insbesondere ist es bevorzugt, wenn die Materialaussparung als Vertiefung in Breite b und/oder in Höhe h des Profilstabes in wenigstens einem mittigen Bereich der Unter- bzw. der Schmalseite ausgeprägt ist. Der Profilstab weist eine Längsachse, eine quer zur Längsachse verlaufende Querachse, die vorzugsweise der neutralen Faser entspricht, sowie eine im rechten Winkel zur Querachse von der Unterseite zur Oberseite verlaufende Achse auf, wobei in einer besonders vorteilhaften Ausführungsform eine Materialaussparung im Bereich der Querachse und/oder im Bereich der Achse verläuft und/oder wobei die Querschnittsform zur Achse symmetrisch ist.

In einer besonders bevorzugten Ausführungsform der Erfindung entspricht der Profilstab im Querschnitt einem I-Profil. Es können im Rahmen der Erfindung auch andere Profilformen vorgesehen sein, wie z.B. U- oder T-Profile.

Im Rahmen der Erfindung ist weiters vorgesehen, dass der Profilstab hergestellt wird, indem Material in Längsrichtung des Profilstabes verdrängt wird.

Im Rahmen der Erfindung ist vorgesehen, dass der warm verformte Federkörper, der in eingebautem Zustand eine federnde Wirkung hat, wenigstens eine Materialaussparung aufweist, die wenigstens bereichsweise über seine Länge vorgesehen ist.

In einer Ausführungsform der Erfindung kann sich die Materialaussparung über die gesamte Länge der Fahrzeugfeder erstrecken. In anderen Ausführungsformen der Erfindung kann vorgesehen sein, dass die Länge der Materialaussparung 1 bis 99 % der Länge der Fahrzeugfeder, insbesondere 10 bis 90 % oder 20 bis 80 % oder 40 bis 40% oder ca. 50 % des Profilstabes beträgt.

In einer besonders bevorzugten Ausführungsform der Erfindung entspricht der Federkörper wenigstens abschnittsweise im Querschnitt einem I-Profil.

Da beim Herstellen der Fahrzeugfeder Walzprozesse stattfinden, ist es im Rahmen der Erfindung bevorzugt, wenn sich die Querschnittsform des Federkörpers über seine Länge ändert, insbesondere wenn sich die Breite der Materialaussparung über die Länge der Materialaussparung ändert. Somit kann die Breite der Materialaussparung an die optimale Form der fertigen Feder angepasst werden, wobei ebenfalls Bereiche mit unterschiedlicher Biegefestigkeit erzielt werden können.

Die Tiefe der Materialaussparung im Profilstab und/oder im Federkörper kann über die Breite der Materialaussparung - im Querschnitt betrachtet - kontinuierlich oder diskontinuierlich zunehmen oder abnehmen. Die Tiefe der Materialaussparung kann durchgehend, z.B. geradlinig oder bogenförmig zunehmen und/oder abnehmen oder z.B. stufenförmig zunehmen und/oder abnehmen, wobei die Tiefe der Materialaussparung abschnittsweise gleich bleibt. Auch kann die Tiefe der Materialaussparung zuerst zunehmen, dann gleich bleiben oder abnehmen und anschließend wieder zunehmen.

Eine erfindungsgemäße Fahrzeugfeder wird aus einem länglichen Profilstab derart hergestellt, dass der Profilstab mit wenigstens einer Materialaussparung, die wenigstens bereichsweise über die Länge des Profilstabes vorgesehen ist, gewalzt, wird. Insbesondere kann vorgesehen sein, dass als Ausgangsmaterial für das Warmverformen ein Profilstab mit wenigstens einer Materialaussparung verwendet wird, deren Querschnittsform über deren gesamten Länge gleich ist, wobei die Breite der Materialaussparung während dem Warmverformen über die Länge des Federkörpers unterschiedlich verändert wird.

Unter Materialaussparung wird im Rahmen der Erfindung eine Materialeinsparung verstanden, d.h. dass sonst im Bereich der Materialaussparung vorhandenes Material durch die Materialaussparung ersetzt ist, bzw. dass sonst vorhandenes Material nicht vorhanden ist. Insbesondere kann im Rahmen der Erfindung unter Materialaussparung verstanden werden, dass im Bereich der Materialaussparung Material in Längsrichtung des Profilstabes verdrängt wird. Im Gegensatz dazu weisen z.B. gerippte Blattfedern keine Materialaussparung auf, da hier das Material nicht in Längsrichtung, sondern in Richtung senkrecht zur Querachse des Profilstabes, "verdrängt" ist. Auch bedeuten z.B. Prägungen in einem Profilstab bzw. in einer Fahrzeugfeder keine Materialaussparung, da bei Prägungen Material nicht über die (vorzugsweise gesamte) Längsrichtung des Profilstabes bzw. des Federkörpers verdrängt ist.

Beim Herstellen des erfindungsgemäßen Profilstabes wird Material in Längsrichtung des Profilstabes verdrängt. Dies kann dadurch geschehen, dass der Profilstab entlang einer Form geführt wird, die wenigstens eine Erhebung, zum Beispiel eine Nase, aufweist, deren Querschnittsform ein Negativabbild der gewünschten Querschnittsform der Materialaussparung im fertigen Profilstab darstellt.

Beispielsweise kann der Herstellungsprozess einer Fahrzeugfeder wie folgt zusammengefasst werden:
Ein Profilstab, insbesondere ein Flachstabstahl, mit einer Materialaussparung mit gleichbleibender Querschnittsform über seine gesamte Länge wird auf die gewünschte Länge geschnitten. Als Ausgangsmaterial wird im Rahmen der Erfindung vorzugsweise ein Flachstabstahl nach EN 10092 oder BS 970-2 und ein Federstahl nach EN 10089 oder EN 10083 verwendet; es können aber auch andere warm verformbare Stähle verwendet werden. Im Rahmen der Erfindung können auch je nach Land/Region genormte Feder oder Vergütungsstähle verwendet werden. Für die weitere Warmformgebung wird der Profilstab auf eine Temperatur von ca. 800 bis 1200 °C gebracht. Der abgelängte Profilstab wird bei dieser Temperatur horizontal oder vertikal gewalzt und die Enden werden je nach gewünschter Fahrzeugfeder entsprechend verarbeitet. Zum Auswalzen wird der Profilstab einseitig erwärmt, zwischen ein geöffnetes Walzenpaar gefahren und dann in Längsrichtung zwischen diesen einmal oder mehrmals hindurch bewegt. Bei diesem Bearbeitungsvorgang kann der Abstand zwischen den Walzen verändert werden, so dass der gewünschte Verlauf des Profilstabes eingestellt wird. Beim Walzen des Profilstabs kann durch Ausüben von unterschiedlichem Druck somit auch die Breite der Materialaussparung über die Länge des Profilstabes unterschiedlich verändert werden. Anschließend wird der Profistab auf der gegenüberliegenden Seite erwärmt und ein erneuter Walzprozess durchgeführt.

Je nach gewünschter Fahrzeugfeder, insbesondere wenn mehrere Federn im Einsatzzustand übereinander angeordnet sein sollen (mehrlagige Federn), kann ein Mittelloch, ein Sackloch oder sonstige Vertiefungen für eine Federschraube oder andere Formschlusselemente eingebracht werden. Der Profilstab kann in einem weiteren Schritt ein oder zwei Augen erhalten. Der erneut erwärmte oder noch auf der erforderlichen Temperatur befindliche gewalzte Profilstab kann dann ggf. eine oder mehrere Pressstationen für eine Endenbearbeitung durchlaufen, wonach ein Rollvorgang durchgeführt werden kann. Das Rollen der Enden zu Augen findet ebenfalls bei Temperaturen von ca. 800 bis 1200 °C statt. In weiteren Schritten kann die Feder (bei ca. 900 °C) gebogen und anschließend vergütet werden.

Je nach Art der Fahrzeugfeder können beide Enden ein Auge aufweisen. Es kann auch ein Ende ein gerolltes oder eingeformtes, z.B. im Federkörper eingebrachtes, Auge aufweisen, wogegen das andere Ende im Wesentlichen flach verläuft. In den zuletzt genannten Ausführungsformen kann der Profilstab insbesondere im Bereich zum flach verlaufenden Ende abgewinkelt bzw. abgekröpft sein. In einer anderen Ausführungsform können auch beide Enden im Wesentlichen flach und ggf. leicht abgekröpft (ohne Auge) verlaufen.

Je nach Art der Fahrzeugfeder können die Bearbeitungsschritte abgeändert werden. Im Rahmen der Erfindung kann der Profilstab auch eingangs auf eine bestimmte Bearbeitungstemperatur erwärmt werden, wobei bei den nachfolgenden Bearbeitungsschritten keine weitere Erwärmung notwendig ist.

Merkmale des bzw. die Querschnittsform des Profilstabes, insbesondere der Verlauf der Materialaussparung über die Höhe des Profilstabes, können auch beim Federkörper vorliegen. Merkmale des bzw. die Querschnittsform des Federkörpers, insbesondere der Verlauf der Materialaussparung über die Höhe des Federkörpers, können auch beim Profilstab vorliegen.

Bevorzugte und vorteilhafte Ausführungsformen der Erfindung ergeben sich aus der nachstehenden Beschreibung unter Bezugnahme auf die angeschlossenen Zeichnungen, in welchen bevorzugte Ausführungsformen dargestellt sind.

Es zeigt: Fig. 1 bis 5 bekannte Querschnittsformen von Profilstäben für Fahrzeugfedern aus warm verformbaren Stahl, Fig. 6 und 7 Ausführungsformen von Profilstäben für eine erfindungsgemäße Fahrzeugfeder im Querschnitt, Fig. 8 bis 11 weitere Querschnittsformen von Profilstäben für eine Fahrzeugfeder, Fig. 12 eine erste Ausführungsform einer erfindungsgemäßen Lenkerfeder mit eingerolltem Auge, Fig. 13 eine zweite Ausführungsform einer erfindungsgemäßen Lenkerfeder mit in den Federkörper eingebrachtem Auge und Fig. 14 eine Ausführungsform einer erfindungsgemäßen Parabelfeder.

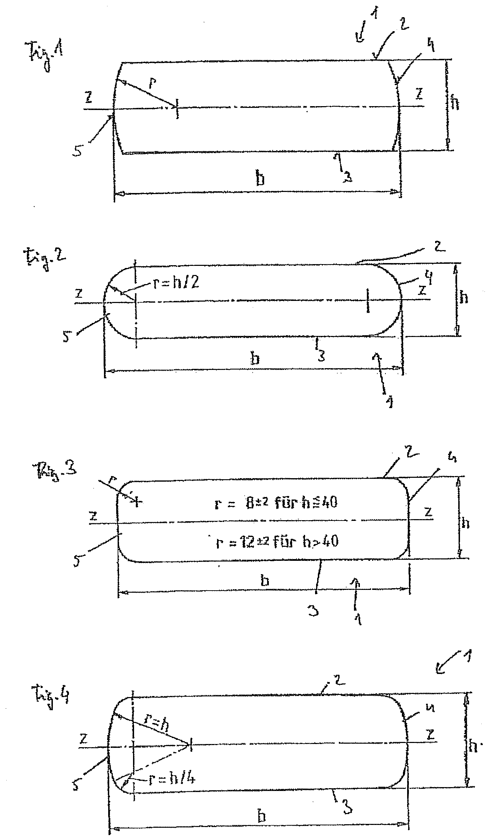

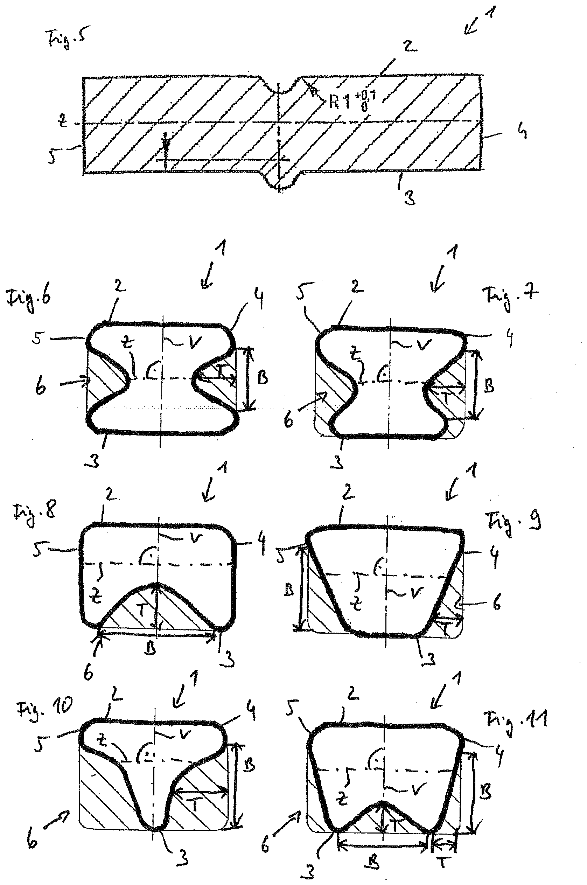

In den Fig. 1 bis 5 sind bislang bekannte Querschnittsformen von Profilstäben 1 aus Flachstabstahl dargestellt, nämlich ein naturkantiges Profil (Fig. 1), ein Profil mit halbkreisförmigen Schmalseiten (Fig. 2), ein Profil mit gerundeten Kanten (Fig. 3) und ein Korbbogen-Profil (British Standard)(Fig. 4). Fig. 5 zeigt im Querschnitt einen warm verformbaren Profilstab 1 für gerippte Blattfedern.

Die in den Fig. 1 bis 3 dargestellten warm verformbaren Profilstäbe 1 entsprechen der DIN EN 10092-1 . Fig. 4 zeigt einen warm verformbaren Profilstab 1 aus Flachstabstahl mit einer Querschnittsform nach British Standard BS 970-2:1988 b. Der in Fig. 5 dargestellte warm verformbare Profilstab 1 entspricht der DIN EN 10092-2. Die Profilstäbe 1 weisen eine Oberseite 2, eine Unterseite 3 und zwei Schmalseiten 4, 5 auf. Weiters sind in den Fig. 1 bis 4 die Breite b, die Höhe h und die Querachse z (diese entspricht auch der hinsichtlich der Biegespannung definierten neutralen Faser) der Profilstäbe 1 sowie Krümmungsradien r angedeutet. Die Profilstäbe 1 gemäß den Fig. 1 bis 4 weisen über ihre Länge keine Materialaussparung auf. Auch der in Fig. 5 dargestellte Profilstab 1 weist über seine Länge keine Materialaussparung auf, da im gerippten Bereich sämtliches Material vorhanden ist und das Material auch nicht in Längsrichtung verdrängt ist.

Im Unterschied zu den bekannten Profilstäben 1 weist ein erfindungsgemäßer Profilstab 1 wenigstens eine Materialaussparung 6 auf. Somit kann das Gewicht einer warm gewalzten Fahrzeugfeder durch das Ausgangsmaterial reduziert werden, wobei die Kraftaufnahme und die federnde Wirkung der Fahrzeugfeder nicht beeinträchtigt wird.

Beispielhaft ist in Fig. 6 ein Profilstab 1 (insbesondere aus Flachstabstahl) dargestellt, der (ausgehend von einem bekannten Profilstab 1 nach Fig. 3) in seinen beiden Schmalseiten 3, 4 jeweils eine Materialaussparung 6 mit einer Breite B und einer Tiefe T aufweist. Das sonst an den Schmalseiten 4,5 vorhandene Material (wie z.B. in Fig. 3) ist im Profilstab 1 nach Fig. 6 entlang seiner Längsrichtung verdrängt und im Profilstab 1 nicht mehr vorhanden. In der in Fig. 6 und in Fig. 7 dargestellten Ausführungsform weist der Profilstab 1 ein I-Profil mit einer im Querschnitt bogenförmig verlaufenden Materialaussparung 6 auf. Die Tiefe T der Materialaussparung 6 nimmt über deren Breite B zuerst kontinuierlich zu and dann wieder kontinuierlich ab.

Unterschied zwischen den in den Fig. 6 und 7 dargestellten Ausführungsformen ist, dass die Unterseite 3 des Profilstabes 1 gemäß Fig. 7 weniger breit ist als dessen Oberseite 2.

In der in Fig. 8 dargestellten Querschnittsform weist der Profilstab 1 ein nach unten offenes U-Profil mit einer im Querschnitt bogenförmig verlaufenden Materialaussparung 6 auf, d.h. die Materialaussparung 6 ist in der Unterseite 3 vorgesehen.

In der in Fig. 9 dargestellten Querschnittsform weist der Profilstab 1 eine im Wesentlichen trapezförmige Querschnittsform mit abgerundeten Ecken auf. Die Materialaussparung 6 verläuft vom oberen Bereich des Profilstabes 1 geradlinig bis zur Unterseite 3, wobei die Tiefe T der Materialaussparung 6 über deren Breite B stetig zunimmt. Die Materialaussparung 6 ist in beiden Schmalseiten 4, 5 sowie in der Unterseite 3 vorgesehen.

In der in Fig. 10 dargestellten Querschnittsform weist der Profilstab 1 ein T-Profil mit einer im Querschnitt wellenförmig verlaufenden Materialaussparung 6 auf. Auch hier nimmt die Tiefe T der Materialaussparung 6 über deren Breite in Richtung zur Unterseite 3 durchgehend zu.

In der in Fig. 11 dargestellten Querschnittsform sind in den beiden Schmalseiten 4, 5 Materialaussparungen 6 vorgesehen, die ähnlich wie in Fig. 9 verlaufen. Zudem ist eine Materialaussparung 6 in der Unterseite 3 vorgesehen, die ähnlich wie in Fig. 8 verläuft.

Allen dargestellten Formen von Profilstäben 1 ist gemeinsam, dass der Profilstab 1 eine quer zu seiner Längsachse verlaufende Querachse z (diese kann der neutralen Faser entsprechen) sowie eine im rechten Winkel zur Querachse z verlaufende Achse V aufweist und dass die Querschnittsform zur Achse V symmetrisch ist. Weiters ist allen gezeigten Formen gemeinsam, dass sich die Materialaussparung 6, bezogen auf eine durch die Breite b und die Höhe h des Profilstabes 1 gebildete, gedachte Querschnittsfläche, (in den Fig. 6 bis 11 schraffiert dargestellt) in den Profilstab 1 hinein erstreckt. Bezogen auf die durch die Breite b und die Höhe h des Profilstabes 1 gebildete, gedachte Querschnittsfläche, lassen sich Randbereiche im Bereich der Ecken (dies können auch abgerundete Ecken sein), sowie mittige Bereiche über die Höhe h und Breite b, definieren. Im Rahmen der Erfindung ist die Materialaussparung 6 eine Vertiefung der Breite b und gegebenenfalls der Höhe h des Profilstabes 1 in wenigstens einem mittigen Bereich. Insbesondere kann vorgesehen sein, dass wenigstens eine Materialaussparung 6 im Bereich und insbesondere entlang der Querachse z und/oder im Bereich und insbesondere entlang der Achse (V) verläuft.

In den dargestellten Profilstäben 1 erstreckt sich die Materialaussparung 6 über die gesamte Länge des Profilstabes 1, wobei sich die Querschnittsform des Profilstabes 1 über seine gesamte Länge nicht ändert.

Wenn aus dem Profilstab 1 eine Fahrzeugfeder mit einem Federkörper 20 hergestellt wird können ein oder mehrere Merkmale der im Profilstab 1 beinhalteten Materialaussparung 6 auch im Federkörper 20 vorliegen. Ebenso kann die Form der Materialaussparung im Federkörper 20 (zum Beispiel über die Höhe des Federkörpers 20 kontinuierlich oder diskontinuierlich zu- und/oder abnehmende Breite B der Materialaussparung 6 oder zum Beispiel über die Breite B der Materialaussparung 6 kontinuierlich oder diskontinuierlich zu- und/oder abnehmende Tiefe T der Materialaussparung 6) bereits im Profilstab 1 vorliegen. In der fertigen Fahrzeugfeder können auch Mischformen von möglichen Materialaussparungen 6 bzw. Querschnittsformen vorliegen. In der fertigen Fahrzeugfeder ist es möglich, dass die Materialaussparung 6 nicht über die gesamte Länge des Federkörpers 20 verläuft, wobei sich die Querschnittsform der Materialaussparung 6 im Federkörper verändert.

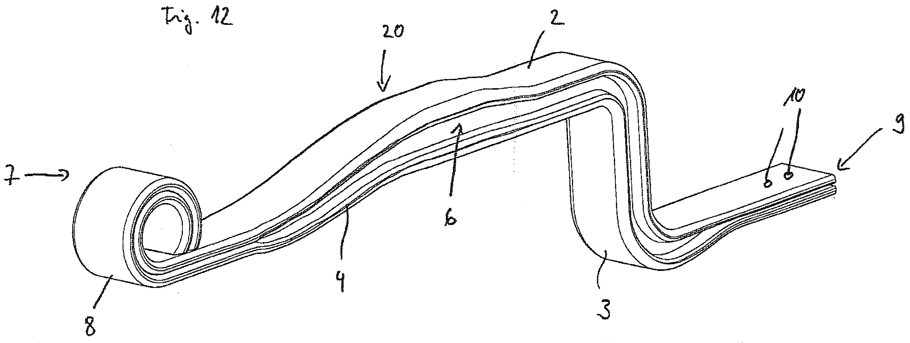

In Fig. 12 ist eine Ausführungsform einer erfindungsgemäßen Lenkerfeder mit einem Federkörper 20 aus einem warm verformten Profilstab 1 dargestellt. An einer seiner Längsenden 7 weist die Lenkerfeder ein gerolltes Auge 8 auf. Das andere Längsende 9 ist abgewinkelt und weist zwei Bohrungen 10 auf, welche zum Montieren z.B. eines Luftfederbalgs dienen.

Der Federkörper 20 weist über einen Großteil seiner Länge an den beiden Schmalseiten 4, 5 eine durchgehende Materialaussparung 6 auf und ist über seine Länge unterschiedlich stark gewalzt. Durch das Walzen ändert sich die Breite B der Materialaussparung 6 über die Länge des Federkörpers 20. Die Tiefe T der Materialaussparung 6 nimmt in dieser Ausführungsform kontinuierlich zu und wieder ab. In der in Fig. 12 dargestellten Ausführungsform weist der Federkörper 20 ein I-Profil auf, wobei die Materialaussparung 6 über die Länge des Federkörpers 20 ein größtenteils gleichbleibende Tiefe T aufweist.

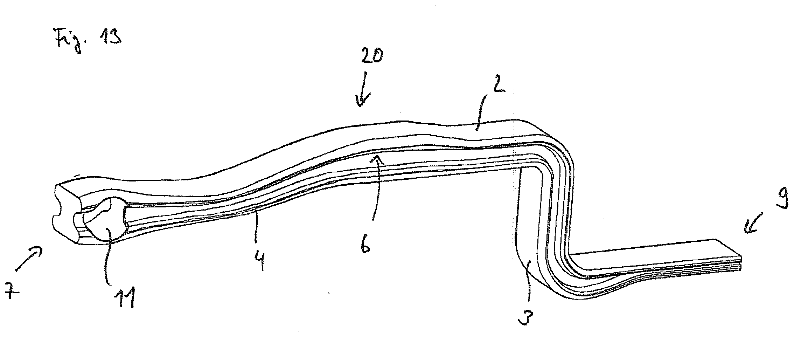

In Fig. 13 ist eine weitere Ausführungsform einer erfindungsgemäßen Lenkerfeder aus einem warm verformten Profilstab 1 dargestellt. An einer seiner Längsenden 7 weist die Lenkerfeder ein eingeformtes Auge 11 auf. Das andere Längsende 9 ist abgewinkelt.

Der Federkörper 20 weist über seine gesamte Länge an den beiden Schmalseiten 4, 5 eine durchgehende Materialaussparung 6 auf und ist über seine Länge unterschiedlich stark gewalzt. Durch das Walzen ändert sich die Breite B der Materialaussparung 6 über die Länge des Federkörpers 20. Die Tiefe T der Materialaussparung 6 nimmt in dieser Ausführungsform unterschiedlich zu und ab. Im Bereich des Längsendes 7, in welchem Bereich das Auge 11 eingeformt ist, weist der Federkörper 20 ein I-förmiges Profil gemäß dem Profilstab 1 aus Fig. 6 auf. Über die Länge des Federkörpers 20 ändert sich dessen Querschnittsform. Z.B. im mittleren Abschnitt des Profilstabes 1 nimmt die Tiefe T der Materialaussparung 6 im Wesentlichen stufenweise zu und ab.

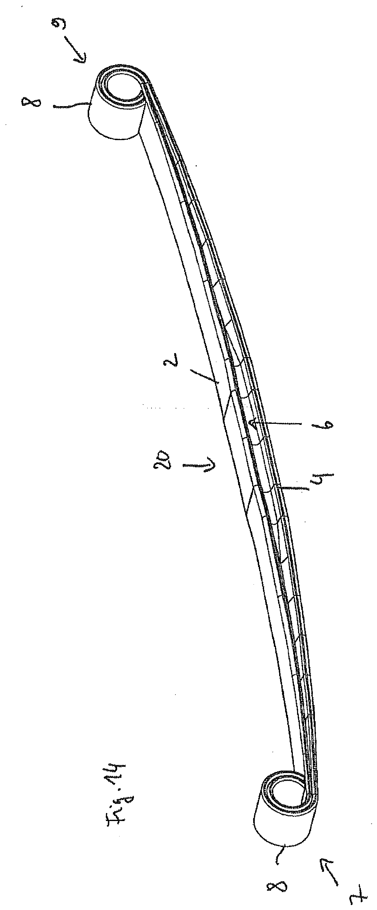

In Fig. 14 ist eine Ausführungsform einer erfindungsgemäßen Parabelfeder aus einem warm verformten Profilstab 1 dargestellt. Die Parabelfeder weist an beiden Enden ein gerolltes Auge 8 auf. Der Federkörper 20 hat im Querschnitt betrachtet ein I-Profil wobei die Breite der Materialaussparung 6 über einen Teil der Länge des Federkörpers 20 zu- bzw. abnimmt und über einen Teil der Länge des Federkörpers 20 gleich bleibt.

In den in Fig. 12 bis 14 (wie auch insbesondere in den Fig. 6 und 7) weist der Federkörper 20 (bzw. Profilstab 1) eine neutrale Faser auf, wobei die Materialaussparung 6 eine Vertiefung der Breite b des Profilstabes 1 über seine Höhe h im Bereich von und entlang der neutralen Faser ist. Diese bevorzugte Ausführungsform kann auch bei nicht dargestellten Querschnittsformen zutreffen.

## Patentansprüche

1. Fahrzeugfeder, insbesondere Lenkerfeder oder Parabelfeder, mit einem länglichen Federkörper (20), der aus einem Profilstab (1) aus Federstahl gewalzt ist, wobei der Federkörper (20) eine Oberseite (2), eine Unterseite (3), zwei Schmalseiten (4, 5), eine Längsachse, eine quer zur Längsachse verlaufende Querachse (z), die der neutralen Faser entspricht, eine im rechten Winkel zur Querachse (z) von der Unterseite (3) zur Oberseite (2) verlaufende Achse (V) sowie wenigstens eine Materialaussparung (6) aufweist, die wenigstens bereichsweise über seine Länge vorgesehen ist, wobei sich die Querschnittsform des Federkörpers (20) über seine Länge ändert, **dadurch gekennzeichnet, dass** wenigstens eine Materialaussparung (6) in wenigstens einer Schmalseite (4, 5) im Bereich der Querachse (z) vorgesehen ist, dass sich die Breite (B) der Materialaussparung (6) über die Länge der Materialaussparung (6) ändert und dass die Tiefe (T) der Materialaussparung (6) im Bereich der Querachse (z) größer ist als die Tiefe (T) in den zur Unterseite (3) und zur Oberseite (2) weisenden Randbereichen der Materialaussparung (6).

2. Fahrzeugfeder nach Anspruch 1, **dadurch gekennzeichnet, dass** sich die Materialaussparung (6) über die gesamte Länge des Federkörpers (20) erstreckt oder dass die Länge der Materialaussparung (6) 1 bis 99 % der Länge des Federkörpers (20), insbesondere 10 bis 90 % oder 20 bis 80 % des Federkörpers (20) beträgt.

3. Fahrzeugfeder nach Anspruch 1 oder 2, **dadurch gekennzeichnet, dass** sich die Tiefe (T) der Materialaussparung (6) kontinuierlich oder diskontinuierlich über die Breite (B) der Materialaussparung (6) ändert.

4. Fahrzeugfeder nach einem der Ansprüche 1 bis 3, **dadurch gekennzeichnet, dass** wenigstens eine weitere Materialaussparung in der Unterseite (3) vorgesehen ist, die eine Vertiefung der Höhe h des Federkörpers (20) in wenigstens einem mittigen Bereich der Unterseite (3) ist.

5. Fahrzeugfeder nach Anspruch 4, **dadurch gekennzeichnet, dass** wenigstens eine Materialaussparung (6) im Bereich der Achse (V) verläuft.

6. Fahrzeugfeder nach einem der Ansprüche 1 bis 5, **dadurch gekennzeichnet, dass** die Querschnittsform zur Achse (V) symmetrisch ist.

7. Fahrzeugfeder nach einem der Ansprüche 1 bis 6, **dadurch gekennzeichnet, dass** der Federkörper (20) wenigstens abschnittsweise im Querschnitt einem I-Profil entspricht.

8. Fahrzeugfeder nach einem der Ansprüche 1 bis 7, **dadurch gekennzeichnet, dass** der Federkörper (20) zwei Längsenden (7, 9) und an wenigstens einem Längsende (7, 9) ein gerolltes Auge (8) oder eingeformtes Auge (11) aufweist.

9. Federsystem für ein Fahrzeug, **dadurch gekennzeichnet, dass** es wenigstens eine Fahrzeugfeder nach einem der Ansprüche 1 bis 8 aufweist.

## Claims

1. Vehicle spring, in particular a trailing arm or a parabolic spring, comprising an elongated spring body (20) which is rolled from a profiled bar (1) made of spring steel, wherein the spring body (20) has a top side (2), a bottom side (3), two narrow sides (4, 5), a longitudinal axis, a transverse axis (z) which extends transversely to the longitudinal axis and which corresponds to the neutral fibre, an axis (V) which extends from the bottom side (3) to the top side (2) at a right angle to the transverse axis (z), and at least one material recess (6) which is provided at least in some regions along the length thereof, wherein the cross-sectional shape of the spring body (20) changes along the length thereof, **characterized in that** at least one material recess (6) is provided in at least one narrow side (4, 5) in the region of the transverse axis (z), **in that** the width (B) of the material recess (6) changes along the length of the material recess (6), and **in that** the depth (T) of the material recess (6) in the region of the transverse axis (z) is larger than the depth (T) in the edge regions of the material recess (6) pointing towards the bottom side (3) and towards the top side (2).

2. Vehicle spring according to claim 1, **characterized in that** the material recess (6) extends along the entire length of the spring body (20), or **in that** the length of the material recess (6) is 1 to 99% of the length of the spring body (20), in particular 10 to 90% or 20 to 80% of the spring body (20).

3. Vehicle spring according to claim 1 or 2, **characterized in that** the depth (T) of the material recess (6) changes continuously or intermittently across the width (B) of the material recess (6).

4. Vehicle spring according to any one of claims 1 to 3, **characterized in that** at least one further material recess is provided in the bottom side (3), said further material recess being a depression in the height h of the spring body (20) in at least one central region of the bottom side (3) .

5. Vehicle spring according to claim 4, **characterized in that** at least one material recess (6) extends in the region of the axis (V).

6. Vehicle spring according to any one of claims 1 to 5, **characterized in that** the cross-sectional shape is symmetrical with respect to the axis (V).

7. Vehicle spring according to any one of claims 1 to 6, **characterized in that**, at least in some portions, the spring body (20) corresponds in terms of cross-section to an I-shaped profile.

8. Vehicle spring according to any one of claims 1 to 7, **characterized in that** the spring body (20) has two longitudinal ends (7, 9) and a rolled eye (8) or integrally formed eye (11) at at least one longitudinal end (7, 9).

9. Suspension system for a vehicle, **characterized in that** it comprises at least one vehicle spring according to any one of claims 1 to 8.

## Revendications

1. Ressort de véhicule, en particulier ressort de bras de suspension ou ressort parabolique, comportant un corps de ressort allongé (20) qui est laminé à partir d'une barre profilée (1) en acier à ressort, le corps de ressort (20) présentant une face supérieure (2), une face inférieure (3), deux petits côtés (4, 5), un axe longitudinal, un axe transversal (z) s'étendant transversalement à l'axe longitudinal et correspondant à la fibre neutre, un axe (V) s'étendant à angle droit par rapport à l'axe transversal (z) de la face inférieure (3) vers la face supérieure (2) et au moins un évidement de matériau (6) qui est prévu au moins dans certaines zones sur sa longueur, la forme en section transversale du corps de ressort (20) changeant sur sa longueur, **caractérisé en ce qu'**au moins un évidement de matériau (6) est prévu dans au moins un petit côté (4, 5) dans la zone de l'axe transversal (z), que la largeur (B) de l'évidement de matériau (6) change sur la longueur de l'évidement de matériau (6) et que la profondeur (T) de l'évidement de matériau (6) dans la zone de l'axe transversal (z) est supérieure à la profondeur (T) dans les zones de bord de l'évidement de matériau (6) dirigées vers la face inférieure (3) et la face supérieure (2).

2. Ressort de véhicule selon la revendication 1, **caractérisé en ce que** l'évidement de matériau (6) s'étend sur toute la longueur du corps de ressort (20) ou que la longueur de l'évidement de matériau (6) est de 1 à 99 % de la longueur du corps de ressort (20), en particulier de 10 à 90 % ou 20 à 80 % du corps de ressort (20).

3. Ressort de véhicule selon la revendication 1 ou 2, **caractérisé en ce que** la profondeur (T) de l'évidement de matériau (6) change de façon continue ou discontinue sur la largeur (B) de l'évidement de matériau (6).

4. Ressort de véhicule selon l'une des revendications 1 à 3, **caractérisé en ce qu'**au moins un autre évidement de matériau est prévu dans la face inférieure (3), qui est un creusement de hauteur h du corps de ressort (20) dans au moins une zone centrale de la face inférieure (3).

5. Ressort de véhicule selon la revendication 4, **caractérisé en ce qu'**au moins un évidement de matériau (6) s'étend dans la zone de l'axe (V).

6. Ressort de véhicule selon l'une des revendications 1 à 5, **caractérisé en ce que** la forme en section transversale est symétrique par rapport à l'axe (V).

7. Ressort de véhicule selon l'une des revendications 1 à 6, **caractérisé en ce que** le corps de ressort (20) correspond, au moins sur certaines parties, à un profil en I en section transversale.

8. Ressort de véhicule selon l'une des revendications 1 à 7, **caractérisé en ce que** le corps de ressort (20) présente deux extrémités longitudinales (7, 9) et, à au moins une extrémité longitudinale (7, 9), un œillet roulé (8) ou un œillet formé à l'intérieur (11).

9. Système de suspension pour un véhicule, **caractérisé en ce qu'**il présente au moins un ressort de véhicule selon l'une des revendications 1 à 8.
